# EUROPEAN PATENT APPLICATION

(11) **EP 1 327 950 A2**
(43) Date of publication of application: **16.07.2003**
(21) Application number: 02029035.9
(22) Date of filing: 27.12.2002
(51) Int. Cl.: G06F 17/60

(54) **Membership information integrated management system and service**

(30) Priority: 09.01.2002 JP 2002002320
(71) Applicant: Toshiba Tec Kabushiki Kaisha, Chiyoda-ku, Tokyo (JP)
(72) Inventor: Yamamoto, Hiroshi, Toda-shi, Saitama-ken (JP); Yamaguchi, Hiroshi, Tagata-gun, Shizuoka-ken (JP); Shioiri, Katsuo, Yokohama-shi, Kanagawa-ken (JP); Harada, Hirofumi, Irvine, CA 92614 (US); Higashi, Keishi, Hino-shi, Tokyo (JP); Sato, Mitsuya, Tokyo (JP)
(74) Representative: HOFFMANN - EITLE

(57) **Abstract**

A membership information integrated management system comprising a target server, and a membership server that is connected to the target server and that requires a membership registration, wherein
when a first starting operation to start a first liaison processing is carried out while a user is making access to the objet server thereby to start the first liaison processing, a first liaison starting section transmits target user identification information of the user to a first liaison executing section, and the first liaison executing section receives the target user identification information and checks whether the user is registered as a member in the membership server, and when it has become clear that the user is not registered as a member, the first liaison executing section urges the user to input membership user identification information and register membership.

## Description

### BACKGROUND OF THE INVENTION

### Field of the Invention

The present invention relates to a membership information integrated management system and a membership information integrated management service that are suitable for application to an account aggregation service that is provided on the Internet, for example.

### Description of the Related Art

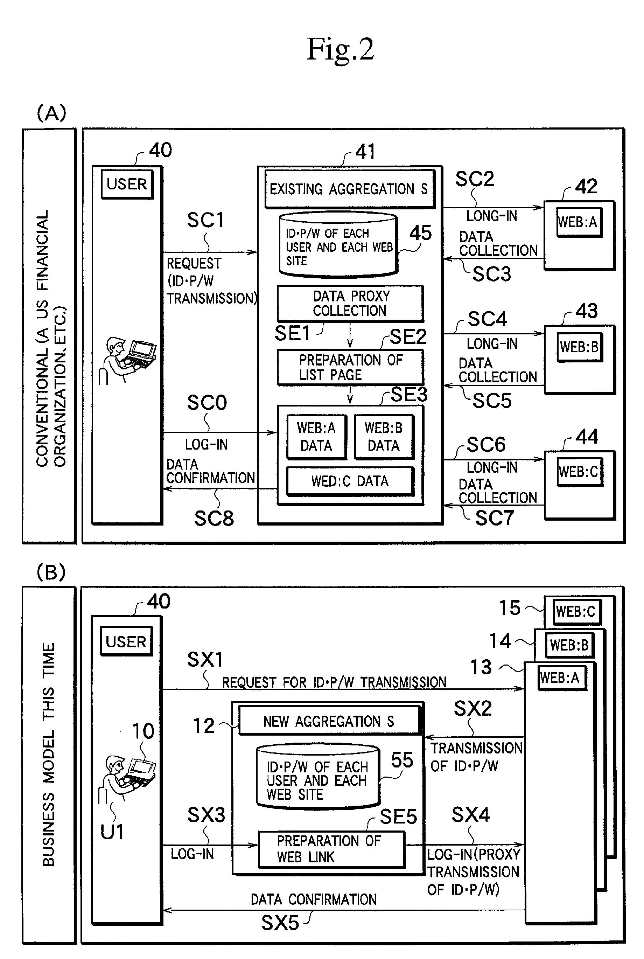

The principle of the account aggregation service conventionally provided from a financial organization on the Internet is as shown in Fig. 2A.

In Fig. 2A, a plurality of Web sites 42 to 44 are membership sites. URLs of these Web sites to which a user 40 has an opportunity to make access, and a user ID and a password of the user 40 in each of the Web sites 42 to 44, are registered in an aggregation server 41 in advance. With this arrangement, when the user 40 makes a log-in only once to the aggregation server 41 according to a predetermined method, the aggregation server 41 automatically logs in to the Web sites 42 to 44, and collects and edits data from the Web sites 42 to 44.

As a result, the data collected from the three Web sites 42 to 44 are collectively displayed on a screen SE3, and the user 40 can look through the displayed screen, for example. As compared with a method of making a sequential log-in to the Web site 42 to 44, the operation load of the user 40 is reduced substantially.

According to this account aggregation service, as the user 40 can carry out necessary processing via the screen SE3, there is little opportunity for the user 40 to make direct access to each of the Web sites 42 to 44. The aggregation server 41 collects only necessary data from the Web sites 42 to 44, and displays the data on the screen SE3. Therefore, each of the Web sites 42 to 44 has small contact with the user 40. Consequently, provision andtransmission of information from each Web site to the user 40 is reduced, and the communication efficiency is lowered. As a result, there is a high possibility that each Web site cannot manage the user's utilization state.

Further, depending on the processing carried out in the aggregation server 41 at the time of collecting data, contents of the data displayed on the screen SE3 may not be the latest contents. Therefore, the reliability in broad term is not necessarily high.

Assume that data obtained from the Web sites 42 to 44 are not closed data like accounts but are open data. In this case, there is the following possibility. Data collected last time for other user are stored in a cache memory in the aggregation server 41. When the collection of the data becomes necessary for a new user, the data are fetched from the cache memory and are used without making access to the Web sites, thereby to reduce the load of the aggregation server 41. In this case, the user 40 may look through the data that are different from the latest data.

When the user 40 has little opportunity of making direct access to the Web sites 42 to 44 based on the account aggregation service, the user 40 finds it difficult to notice that the data are not the latest data.

On the other hand, when the user 40 registers a user ID and a password in each of the Web sites 42 to 44 of the aggregation server 41, this becomes a substantial load on the user 40. Therefore, this work is not convenient for the user 40.

### SUMMARY OF THE INVENTION

In order to achieve the above object, according to a first aspect of the present invention, there is provided a membership information integrated management system comprising a target server, and a membership server that is connected to the target server and that requires a membership registration. The target server adopts a membership system that identifies a user based on predetermined target user identification information, and comprises a first liaison starting section that starts a predetermined first liaison processing according to a user operation. The membership server comprises a first liaison executing section that receives a start of the first liaison processing, and executes the first liaison processing, and a first user identification information storing section that stores membership user identification information to identify the user in the membership server, by relating this information to the target user identification information. When a first starting operation to start the first liaison processing is carried out while the user is making access to the objet server thereby to start the first liaison processing, the first liaison starting section transmits the target user identification information of the user to the first liaison executing section. The first liaison executing section receives the target user identification information and checks whether the user is registered as a member in the membership server. When it has become clear that the user is not registered as a member, the first liaison executing section urges the user to input membership user identification information and register membership.

According to a second aspect of the invention, there is provided a membership information integrated management system comprising a target server, and a membership server that is connected to the target server and that requires a membership registration. The target server adopts a non-membership system that does not clearly identify a user based on the user's intention, and comprises a second liaison starting section that starts a predetermined second liaison processing according to a user operation or generates a program code for starting the second liaison processing. The membership server comprises a second liaison executing section that receives a start of the second liaison processing, and executes the second liaison processing, and a second user identification information storing section that stores membership user identification information to identify the user in the membership server. When a second starting operation to start the second liaison processing is carried out to the program or the second liaison starting section while the user is making access to the objet server thereby to start the second liaison processing, the second liaison executing section checks whether the user is registered as a member in the membership server. When it has become clear that the user is not registered as a member, the second liaison executing section urges the user to input membership user identification information and register membership.

According to a third aspect of the invention, there is provided a membership information integrated management system comprising a target server, and a membership server that is connected to the target server and that requires a membership registration. The membership server comprises a target server access information storing section that stores target server access information to be used to specify a target server at the time of making access to the target server, for each one or a plurality of target servers selected by the user, and a contents obtaining section that presents screen information showing the target server to the user, makes access to the target server by using corresponding target server access information according to a user's selection operation based on the screen information, and obtains contents from the target server.

According to a fourth aspect of the invention, there is provided a membership information integrated management system comprising a target server, and a membership server that is connected to the target server and that requires a membership registration. The target server comprises an automatic transmitter that automatically transmits corrected contents to the membership server when there has been a change in specified contents according to a condition specified in advance. The membership server comprises an external shape attribute transmitter that obtains external shape attribute information showing predetermined external shape attribute relating to contents received from the automatic transmitter, and transmits the external shape attribute information to a user terminal specified in advance by the user, and an edit provider that carries out a predetermined edit processing to contents received from the automatic transmitter, and provides an edit result to the user.

According to a fifth aspect of the invention, there is provided a membership information integrated management service that uses a target server, and a membership server that is connected to the target server and that requires a membership registration. In the target server, a membership system that identifies a user based on predetermined target user identification information is adopted, and a first liaison starting section starts a predetermined first liaison processing according to a user operation . In the membership server, a first liaison executing section receives a start of the first liaison processing, and executes the first liaison processing, and as a part of the first liaison processing, a first user identification information storing section stores membership user identification information to identify the user in the membership server, by relating this information to the target user identification information. When a first starting operation to start the first liaison processing is carried out while the user is making access to the objet server thereby to start the first liaison processing, the first liaison starting section transmits the target user identification information of the user to the first liaison executing section. The first liaison executing section receives the target user identification information, and checks whether the user is registered as a member in the membership server. When it has become clear that the user is not registered as a member, the first liaison executing section urges the user to input membership user identification information and register membership.

According to a sixth aspect of the invention, there is provided a membership information integrated management service that uses a target server, and a membership server that is connected to the target server and that requires a membership registration. In the target server, a non-membership that does not clearly identify a user based on the user' s intention is adopted, and a second liaison starting section starts a predetermined second liaison processing according to a user operation or generates a program code for starting the second liaison processing . In the membership server, a second liaison executing section receives a start of the second liaison processing, and executes the second liaison processing, and a second user identification information storing section stores membership user identification information to identify the user in the membership server. When a second starting operation to start the second liaison processing is carried out to the program or the second liaison starting section while the user is making access to the objet server thereby to start the second liaison processing, the second liaison executing section checks whether the user is registered as a member in the membership server. When it has become clear that the user is not registered as a member, the second liaison executing section urges the user to input membership user identification information and register membership.

According to a seventh aspect of the invention, there is provided a membership information integrated management service that uses a target server, and a membership server that is connected to the target server and that requires a membership registration. The membership server stores target server access information to be used to specify a target server at the time of making access to the target server, for each one or a plurality of target servers selected by the user, presents screen information showing the target server to the user, makes access to the target server by using corresponding target server access information according to a user's selection operation based on the screen information, and obtains contents from the target server.

According to an eighth aspect of the invention, there is provided a membership information integrated management service that uses a target server, and a membership server that is connected to the target server and that requires a membership registration. In the target server, an automatic transmitter automatically transmits corrected contents to the membership server, when there has been a change in specified contents according to a condition specified in advance. The membership server obtains external shape attribute information showing predetermined external shape attribute relating to contents received from the automatic transmitter, transmits the external shape attribute information to a user terminal specified in advance by the user, carries out a predetermined edit processing to contents received from the automatic transmitter, and provides an edit result to the user.

### BRIEF DESCRIPTION OF THE DRAWINGS

Fig. 1 is a schematic diagram that shows an example of a total structure of main portions of an aggregation system relating to an embodiment of the present invention;
Figs. 2A and 2B are schematic diagrams that show outline operations of a conventional aggregation system and the aggregation system relating to the embodiment;
Fig. 3 is a diagram that shows a sequence of operation at the time of registering membership of the aggregation system relating to the embodiment;
Fig. 4 is a diagram that shows a sequence of operation at the time of registering membership of the aggregation system relating to the embodiment;
Fig. 5 is a diagram that shows a sequence of operation at the time of preparing a URL link table of the aggregation system relating to the embodiment;
Fig. 6 is a diagram that shows a sequence of operation at the time of collecting contents of the aggregation system relating to the embodiment;
Fig. 7 is a diagram that shows a sequence of contents distribution operation at the time of registering membership of the aggregation system relating to the embodiment;
Fig. 8 is a diagram that shows a sequence of operation at the time of collecting contents of the aggregation system relating to the embodiment.

### DETAILED DESCRIPTION OF THE PREFERRED EMBODIMENTS

### (A) Embodiment

Examples of application of a membership information integrated management system and a membership information integrated management service relating to the present invention to an aggregation system and an aggregation service will be explained below based on an embodiment.

### (A-1) Structure of the embodiment

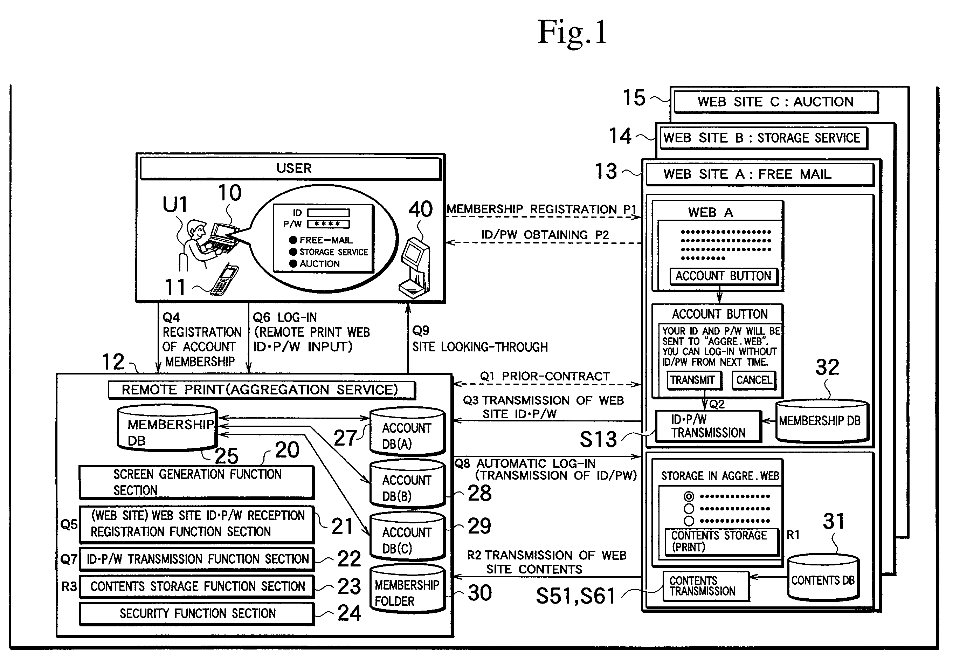

Fig. 1 shows an example of a total structure of an aggregation system in the present embodiment.

In Fig. 1, the aggregation system comprises a personal computer 10, a portable telephone 11, an aggregation server 12, Web sites 13 to 15, and an MMK (multimedia kiosk) terminal 40.

The personal computer 10 is installed with a Web browser to make access to the aggregation server 12 and the Web sites 13 to 15. The portable telephone 11 is installed with a Web browser to make access to the aggregation server 12. It will be assumed that the same user U1 uses the personal computer 10 and the portable telephone 11. While many users can utilize the aggregation system of the present embodiment, it will be assumed that mainly the user U1 uses this system in the following explanation.

The MMK terminal 40 is an information processing apparatus that can be disposed at any position on the town street. This MMK terminal 40 is installed with a screen display function, a print function, and a scanner function, and is operated by an unlimited large number of users (the U1 is one of them). When the MMK terminals 40 are disposed uniformly and in high density at positions where general users can easily visit, such as convenience stores (CVS) and stations, for example, the user U1 can receive a print output and a screen display output at a desired position. The MMK terminal 40 can supplement many performances that are limited and in shortage in the portable telephone 11 because of high requirement for its portability. Therefore, when the user obtains a print output or a display output from the MMK terminal 40 at a desired position, the user can practically obtain mobility similar to a display output or a print output obtained from the portable telephone 11.

The Web sites 13 to 15 disposed on the Internet are sites that basically use a normal Web server as a main body.

The Web sites 13 to 15 may include membership sites and non-membership sites. When the Web site is a membership Web site, membership is registered in advance, and a user ID and a password (PW) to uniquely identify the user U1 are determined in the Web site. At the log-in time, the user needs to input the user ID and the password. On the other hand, when the Web site is not a membership Web site (non-membership Web site), a user ID and a password do not exist.

A membership DB (membership database) 32 shown in Fig. 1 is a database in which the user ID and the password are registered. Contents DB 31 is a database in which Web contents are stored.

The aggregation server 12 disposed on the Internet reduces the long-in operation load of the user U1. This has a function of making an automatic log-in to each Web site (for example, the Web sites 13 to 15), and collectively displaying collected data on one screen and printing out the data . The screen display is carried out on the personal computer 10, the MMK terminal 40, or the portable telephone 11, and the print output is carried out on the MMK terminal 40. A remote print function for carrying out a print out (and a screen display output) from the MMK terminal 40 is one of characteristics of the aggregation server 12. When this characteristic is considered, the aggregation server 12 may be regarded as a remote print server that provides a remote print service.

In the conventional account aggregation server 41 as shown in Fig. 2A, the target aggregation is an account. However, according to the present embodiment, the target of aggregation by the aggregation server 12 is not necessary an account. For example, any type of data such as an image, a moving picture, a document, a product brochure, and a program code can become a target of aggregation.

The aggregation server 12 provides an interface basically as a Web server to the personal computer 10 and the portable telephone 11, and provides an interface basically as a Web browser to the Web sites 13 to 15. Therefore, the HTTP protocol is basically used for communications between the personal computer 10 or the portable telephone 11 and the aggregation server 12, and for communications between any one of the Web sites 13 to 15 and the aggregation server 12.

The aggregation server 12 adopts a membership system.

The aggregation server 12 has an internal structure as shown in Fig. 1, for example.

In other words, the aggregation server 12 comprises a screen generation function section 20, a Web site ID· P/W reception registration function section 21, an ID· P/W transmission function section 22, a contents storage function section 23, a security function section 24, a membership DB 25, account DBs 27 to 29, and a membership folder 30.

The screen generation function section 20 is a section that makes a display output to the user U1 via the personal computer 10 and the MMK terminal 40, based on contents collected from the Web sites 13 to 15. The screen generation function section 20 also has a function of print outputting contents similar to the contents of the screen SE3 by using the MMK terminal 40.

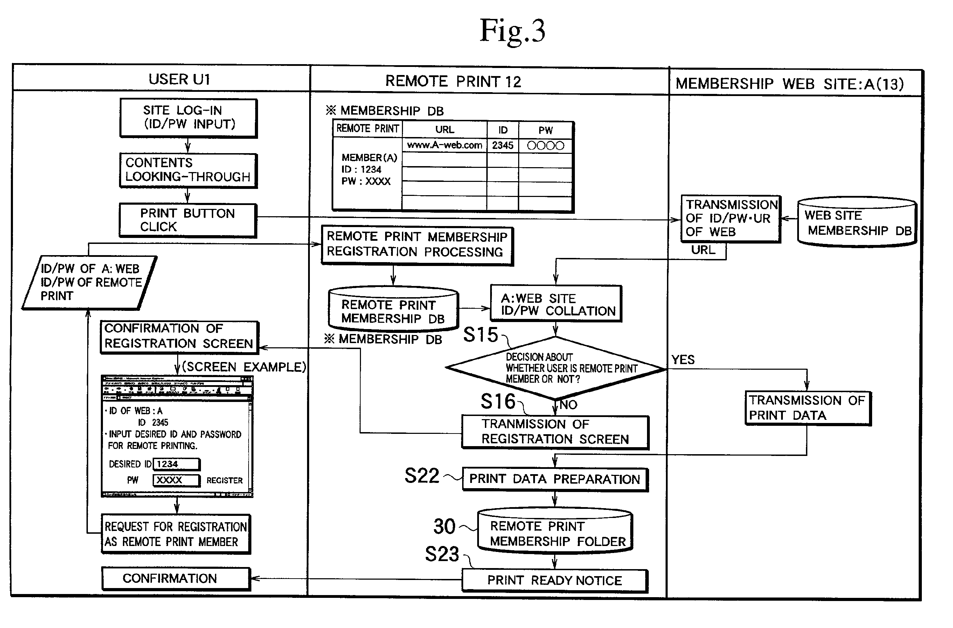

The Web site ID·P/W reception registration function section 21 is a section that receives and registers ID·P/W that is supplied at step S13 (refer to Fig. 3) to be described later. The ID·P/W that is received and registered can be ID·P/W in the aggregation server 12 itself, in addition to the ID·P/W in the Web sites 13 to 15

The ID·P/W transmission function section 22 is a section that supplies a user ID and a password (ID· P/W) of the user U1 in each of the Web sites 13 to 15, to the Web sites 13 to 15 respectively, at the time of making an automatic log-in to the Web sites 13 to 15 at the request of the user U1.

The contents storage function section 23 is a section that temporarily stores the contents transmitted from the Web sites 13 to 15.

The security function section 24 is a section serving for improving the security of the aggregation server 12. Since important data pieces such as user IDs, passwords and the like in respective Web sites of many users are aggregated in the aggregation server 12, necessity for such consideration as to prevent these data pieces data from leaking outside is much higher than the other Web sites.

The membership DB 25 is a database that stores data items shown in a table TB1 shown in Fig. 3, by relating the data to members registered in the aggregation server (remote print server) 12.

In other words, in the membership DB 25, there are registered a URL of one or a plurality of Web sites (for example, 13) to which each user (for example, the user U1) makes access, and a user ID of the user U1 ("2345" in the example, shown) and a password ("○○○○") in the Web site 13, by relating these data to the user ID and the password of the user U1 in the aggregation server 12. The membership DB 25 can also accumulate record information of the operation that the user U1 carried out via the aggregation server 12 after the membership registration.

The membership folder 30 is a folder (directory) that is provided for each member of the aggregation server 12, and is used to temporarily store data of one page (one screen) collected from the MMK terminal 40 to make a print output.

The operation of the system having the above structure according to the present embodiment will be explained below with reference to operation sequences shown in Fig. 2B, Fig. 3 to Fig. 5, Fig. 7, and Fig. 8 respectively.

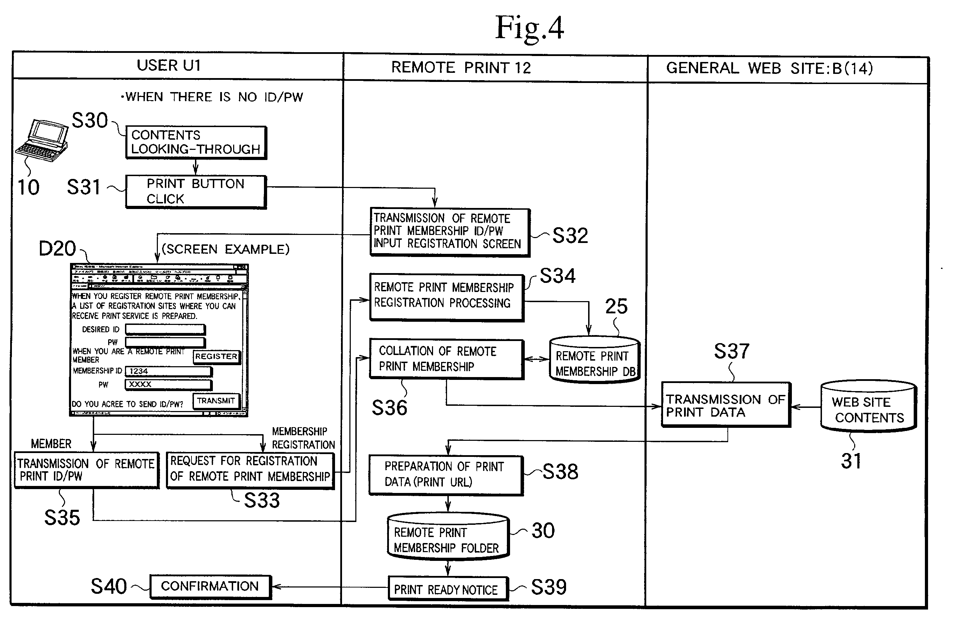

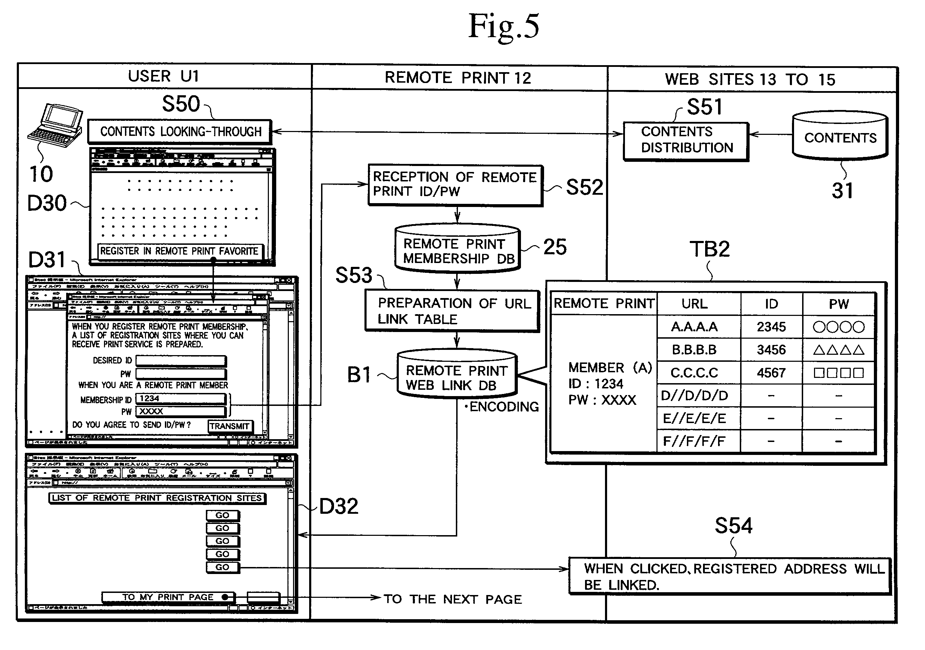

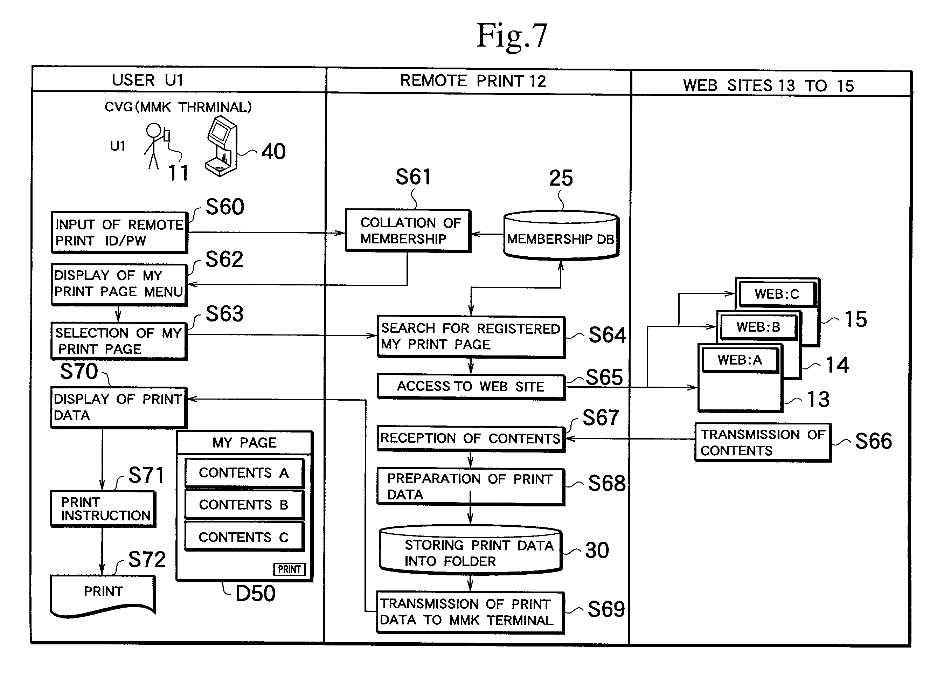

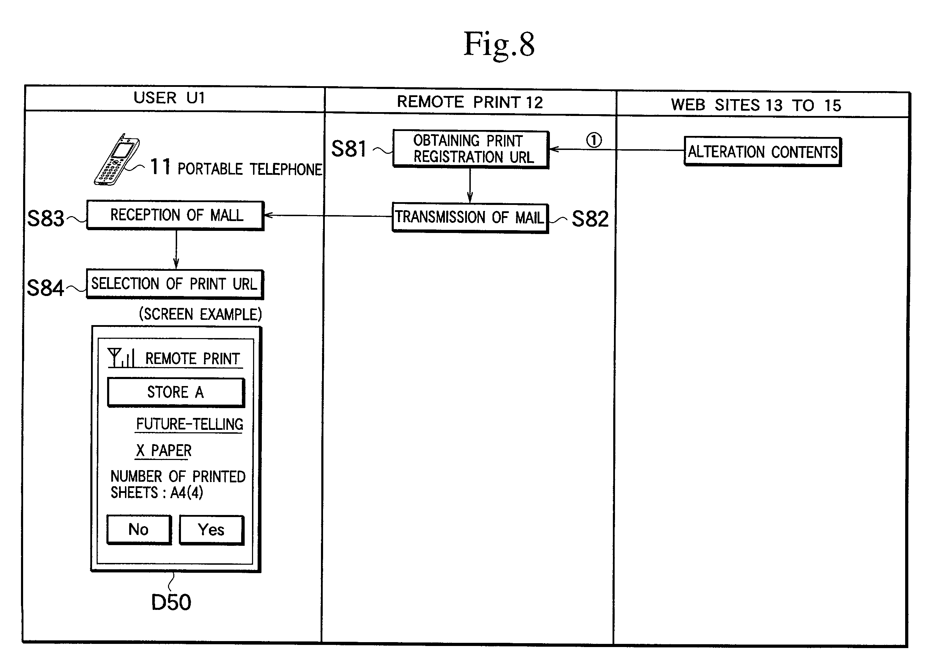

The operation sequence shown in Fig. 3 includes steps S10 to S24, and the operation sequence shown in Fig. 4 includes steps S30 to S40. The operation sequence shown in Fig. 5 includes steps S50 to S54, and the operation sequence shown in Fig. 7 includes steps S60 to S72. The operation sequence shown in Fig. 8 includes steps S81 to S84.

### (A-2) Operation of the system in the embodiment

Fig. 2B shows an outline of the operation sequence relating to the embodiment shown in Fig. 3. There are clear differences between the outline of the conventional system shown in Fig. 2A and the outline shown in Fig.2B.

According to the system shown in Fig. 2A, at step SC1, when the Web sites 42 to 44 to which the user 40 has an opportunity to make access are membership sites, the user ID and the password of the user 40 in each of the Web sites 42 to 44 need to be registered in the aggregation server 41 in advance. However, according to the present embodiment, when the Web sites 13 to 15 adopt a membership system, the user ID and the password of the user U1 are automatically supplied to the aggregation server 12 from each of the Web sites 13 to 15. Therefore, the operation load of the user U1 is reduced.

Fig. 3 shows an operation sequence that arises when the user U1 is looking through a membership Web site.

### (A-2-1) Liaison registration operation from the membership Web site

In Fig. 3, the user U1 operates the personal computer 10 to make a log-in to the membership Web site 13 (S10), and looks through the contents supplied from the Web site 13 (S11). According to the present embodiment, the user can look through the Web site by making a direct access to the Web site, unlike the conventional practice of looking through the Web site via the aggregation server. Therefore, the user U1 can observe various pages according to the structure of the Web site 13. Consequently, when the supplier of the Web site 13 wants, this supplier can freely offer advertisement and promotion of new products to the user U1.

In this instance, a "print" button is displayed at a part of or at the periphery of the contents that the supplier of the Web site 13 considers appropriate. This "print" button is displayed as a result of building up a necessary liaison mechanism between the supplier of the Web site 13 and the supplier of the aggregation server (remote print server) 12 based on a reliability relationship between the two.

When the user U1 has operated (clicked) the "print" button, the Web site 13 obtains the user ID and the password of the user U1 from its own membership DB 32. The Web site 13 adds a URL of the Web site 13 and an IP address and a port number of the personal computer 10 to the obtained user ID and the password of the user U1, thereby to structure a data set. The Web site 13 transmits this data set to the aggregation server 12 (S13). Based on the log-in at step S10, the membership of the user U1 is already registered in the Web site 13. Therefore, it is possible to obtain the user ID and the password of the user U1 from the membership DB 32 without fail.

The inclusion of the URL in the data set is as follows . The aggregation server 12 has no way of specifying the Web site that the personal computer 10 has made access so far. Therefore, in order to collect contents from the Web site 13, it is necessary to inform the URL to the aggregation server 12. When there is only one Web site for building up the liaison mechanism between the aggregation server 12 and the supplier of the Web site, it is possible to omit the URL from the data set. However, because of the characteristics of the aggregation server 12, it is necessary to build up liaison mechanisms with suppliers of a plurality of Web sites.

The inclusion of the IP address of the personal computer 10 in the data set is as follows. In order for the aggregation server 12 to specify the personal computer 10 as the contents (screen S10) transmission destination and to make access to the browser, the aggregation server 12 needs to know the IP address of this personal computer 10. As the personal computer 10 has not accessed the aggregation server 12 but has accessed the Web site 13 so far, it is not possible for the aggregation server 12 to know the IP address unless this IP address is informed by the Web site 13.

The aggregation server 12 receives the data set from the Web site 13. Then, the aggregation server 12 searches the own membership DB 25 to check whether the user U1 is registered as a member in the aggregation server 12, by using the data set (excluding the IP address and the port number) as a search key, and authenticates the user (S14 and S15). In the data set that is used as the search key, the password is not essential, but the URL and the user ID are essential. This user ID is unique only inside the Web site 13. Therefore, there is a possibility that a user ID of other user in other Web site (for example, 15) happens to coincide with the user ID of the user U1 in the Web site 13.

Therefore, in the data set that is transmitted at step S13, the password can be omitted, but the user ID and the URL are essential. When necessary, in place of the URL, it is also possible to use a Web site ID that enables the aggregation server 12 to identify each of the Web sites 13 to 15.

When the user U1 is not registered as a member in the aggregation server 12 and a result of the checking (user authentication) is NG, the process proceeds to step S16. At step S16, the screen D10 for carrying out a membership registration in the aggregation server 12 is transmitted to the personal computer 10. The IP address and the port number in the data set are utilized to specify the transmission destination in this transmission.

At the point of time when the screen S10 is transmitted, the user U2 is in the middle of looking through the Web site 13 in the personal computer 10. Therefore, the user U1 can find the screen S10 transmitted from the aggregation server 12 (S17).

A structure of the screen to be displayed to the user U1 is not limited to the screen S10. When the screen has a message and a field sufficient enough to determine a user ID in the aggregation server 10, this satisfies the condition. Depending on the needs, without making the user input a user ID, the screen may only confirm the user whether the user has an intention to register the membership. If the user has the intention of the membership registration, the aggregation server 12 may automatically prepare a user ID, and transmits the prepared user ID to the user U1. In the system structure, a password is not always necessary.

For example, the user U1 expresses the intention of registering the membership (request for membership registration) by depressing the "register" button on the screen D10. In the example shown in Fig. 3, as the user ID and the password in the aggregation server 12 are input prior to the expression of this user's intention, the screen D10 itself has the user ID (and the password) of the user U1 in the Web site 13. Therefore, the user ID and the password, and the URL to identify the Web site 13 from the aggregation server 12, are registered in the membership DB 25 (S19 and S20), thereby to structure the table TB1.

At this time, a folder for the user U1 is generated in the membership folder 30. To obtain a URL to be registered in the table TB1, the user U1 may input the URL. However, when the URL transmitted from the membership Web site 13 included in the data set is used as it is, this will reduce the operation load of the user U1, and is more convenient. When the URL of the Web site (for example, 13) to be liaised with the aggregation server 12 is known at the time of building up the liaison mechanism based on the reliability relationship, the URL itself is not necessary but data that can specify the URL is sufficient to register the URL in the table TB1.

When the process (step) of checking at steps S14 and S15 is held as a state of waiting for the membership registration at step S20, it is possible to branch step S15 to YES continuously, even when the user U1 does not carry out new operation after the membership registration, by shifting the process to the executable state.

At steps S14 to S20 in Fig. 3, when the user U1 expresses the intention of not carrying out the membership registration, the process may return to the process of looking through the contents (S11).

The membership is registered at steps S14 to S20, or the membership is registered before step S10. When it is confirmed that the user U1 is a member and the result of the checking at steps S14 and S15 becomes OK, step S15 branches to YES, and the process proceeds to step S21.

At step S21, the contents that have the "print" button displayed at a part or at the periphery thereof are transmitted from the Web site 13 to the aggregation server 12.

The aggregation server 12 receives the contents, and prepares print data based on the contents (S22). The print data is stored in the folder for the user U1 within the membership folder 30.

When the print preparation is completed after storing the contents, the aggregation server 12 transmits a print ready notice to the personal computer 10 (S23). The contents of this notice are displayed on the screen. Therefore, the user U1 can confirm the print ready state (S24). The print preparation means a state that the contents can be printed out from the MMK terminal 40 any time, based on the user U1 operation of the MMK terminal 40 to request the aggregation server 12 to print out the contents.

In the example shown in Fig. 3, as the Web site 13 is the only Web site that collects the contents, only the function of the aggregation server 12 as a remote print server is shown. However, it is clear that it is also possible to register values of data items (URL, ID, PW) of the table TB1 into the table TB1 for other membership Web site (for example, 15) in a flow similar to that shown in Fig. 3.

Therefore, when log-in is carried out to a plurality of Web sites by using all URLs registered in the table TB1 at the time of shifting from YES at step S15 to step S21, it is possible to collect the contents from these Web sites. Consequently, at step S22, it is possible to generate a screen by collectively displaying the contents as shown in the screen SE.

Regarding the layout of contents collected from each Web site on the generated screen ( for example, SE3), or regarding from which Web site contents are to be collected (a contents collection range) out of a plurality of Web sites registered on the table TB1, the user U1 may assign them each time when a print output is requested or may make a collective assignment in advance.

The aggregation server 12 is not a server for storing print data as its main purpose. Therefore, from the viewpoint of saving the memory capacity, it is efficient to delete the print data stored in the folder of the user U1 within the membership folder 30, immediately after the print out is executed.

Further, depending on the needs, when the collected contents are stored into the cache memory before arranging the contents in the form of the screen SE3, this is effective to increase the efficiency.

For example, it is possible to increase the time efficiency while maintaining the reliability by arranging as follows. The aggregation server 12 manages the contents stored in the cache memory and a time stamp that shows a time when the contents stored in the cache memory are distributed. Each of the Web sites 13 to 15 manages a time stamp that shows a time when the contents are updated. When the "print" button has been depressed, both time stamps are collated. When both time stamps coincide with each other, the contents are obtained from the cache memory. Only when both time stamps do not coincide with each other, the contents are transmitted from the Web site.

Next, the operation sequence that arises while the user U1 is looking through the non-membership Web site (for example, 14) will be explained with reference to Fig. 4. The contents of processing and screens at many steps in Fig. 4 and Fig. 5 to Fig. 7 to be explained later include the same contents of processing and screens shown in Fig. 3. Only the processing and screens that are different between Fig. 4 to Fig. 7 and Fig. 3 will be mainly explained.

### (A-2-2) Liaison registration operation from the non-membership Web site

As the Web site 14 is a non-membership site, it is not necessary to log in by inputting a user ID and a password. Step S30 corresponds to stepslo. Step S31 corresponds to step S12.

As the Web site 14 is not a membership site, when the user U1 depresses the "print" button at step S31 shown in Fig. 4, the user ID and the password are not transmitted out of the data set. However, it is necessary to transmit an IP address, a port number, and a URL.

Upon receiving the IP address and the port number from the non-membership Web site 14, the aggregation server 12 transmits an ID/PW input and registration screen as shown in a D20 to the personal computer 10 by using the IP address as a transmission destination.

The screen D20 has the following structure. When the user U1 is a member, the screen D20 urges the user U1 to input the user ID and the password already issued. When the user U1 is not a member, the screen D20 urges the user U1 to register membership by inputting a unique user ID and password that the user wants. The screen D20 is similar to the screen D10, except that the screen structure is not necessarily the same as shown so long as the purpose is achieved.

When the user U1 is not a member of the aggregation server 12, the user U1 inputs the user ID and the password, and operates the "register" button, following the structure of the screen D20. Then, membership registration is requested to the aggregation server 12. Upon receiving this request, the aggregation server 12 registers the user ID and the password and the URL included in the data set, in the table TB1. Thus, the membership registration is carried out.

In the registration to the table TB1, a value of a data item "URL" is the URL of the Web site 14 included in the data set. However, values of a data item (ID) and a data item (PW) are vacant to show that these data do not exist.

On the other hand, when the user U1 is a member of the aggregation server 12, the user U1 inputs the user ID ("1234") and the password ("XXXX"), and depresses the "transmit" button. Then, the user ID and the password are transmitted to the aggregation server 12 (S35), and a user authentication is carried out (S36).

When a result of the user authentication is OK, the aggregation server 12 makes access to the Web site 14 by using the URL included in the data set. The contents having the "print" button displayed at a part or at the periphery thereof at step S31 are transmitted from the Web site 14 to the aggregation server 12.

In Fig. 4, portions at steps S37 to S40 may be exactly the same as the portions of the branching from YES at step S15 to steps S21 to S24 shown in Fig. 3.

From the operation sequence shown in Fig. 4, it is clear that it is also possible to register the URL of the non-membership Web site 14 into the table TB1. It is general that a Web site that the user U1 looks through includes a membership Web site and a non-membership Web site. Therefore, the actual table TB1 may have a mixture of a row (set) in which all data items of URL, ID and PW have valid values, and a row in which only URL has a valid value, and ID and PW have vacant values. Consequently, the contents collection range may include both a membership Web site ( for example, 13) and a non-membership Web site (for example, 14).

In Fig. 3 and Fig. 4, there is a possibility that a plurality of users access the Web site 13 (or 14) substantially at the same time and depress the "print" button substantially at the same time, thereby to carry out the processing at steps S12 (or S31) and after in parallel. At the Web site 13 shown in Fig. 3, it is possible to identify a user ID and a password, as the Web site 13 is a membership Web site. However, at the Web site 14 shown in Fig. 4, in order for the aggregation server 12 to identify a plurality of users who have depressed the "print" button at the same time, it is necessary to input some identification information such as an ID, as the Web site 14 is a non-membership site.

Alternatively, it is possible to identify users by utilizing IP addresses included in the data set. There are devices that have a function of replacing a transmitter IP address that is included in the IP packet such as a proxy server and an NAT, in the connection to the Internet. In the light of this fact, the IP address can be used at least as a temporary user identifier, although the IP address cannot be used as a permanent user identifier.

Next, the operation sequence of registering a bookmark on the aggregation server 12 by utilizing a plurality of sites as a portal site will be explained with reference to Fig. 5. The bookmark has an object of avoiding the operation of inputting a URL at the time of making access to a Web site having a high using frequency. Although the bookmark is originally a function of a Web browser, the bookmark will be laid out on the aggregation server 12 in this embodiment. So long as the bookmark is a function of a browser, this only works to omit the procedure of inputting a URL. However, when the bookmark is laid out on the aggregation server 12, it becomes easy to liaise between the aggregation server 12 and other Web sites 13 to 15, and between the aggregation service and the remote print service.

Only points in Fig. 5 that are different from those in Fig. 4 and Fig. 3 will be mainly explained. In Fig. 5, it will be assumed that the user U1 has already been registered in the aggregation server 12.

### (A-2-3) Bookmark registration operation

In Fig. 5, while the user U1 is looking through the contents of any one of the Web sites 13 to 15 (S50 and S51), the user U1 finds a button or a tag having a label that urges the user to register a bookmark in the aggregation server 12, at a part of or at the periphery of the contents, as shown in a screen D30. The Web site may be a membership site or a non-membership site.

When the user U1 depresses the button or the tag on the screen D30, the screen displayed on the personal computer 10 shifts from the screen D30 to D31.

The user U1 inputs a user ID and a password following the structure of the screen D31, and depresses the "transmit" button. Then, the user ID and the password are transmitted to the aggregation server 12. The aggregation server 12 receives the user ID and the password (S52), and authenticates the user.

When a result of the user authentication is OK, a URL link table TB2 for the user U1 is prepared (S53), and this is stored in a Web link database B1.

As is clear from the comparison between the table TB1 shown in Fig. 3 and the URL link table TB2, the structure (schema) of the URL link table TB2 is exactly the same as that of the table TB1. Therefore, a method of registering a value of each data item (URL value or the like) in the URL link table TB2 may be the same as the method for registering in the table TB1. It is of course possible to utilize the table TB1 stored in the membership DB25 as the URL link table TB2.

The screen D32 is automatically generated by the aggregation server 12 based on the stored contents of the URL link table TB2 (including the TB1 that is used as the TB2). A plurality of "GO" buttons are laid out on the screen S32. Each "GO" button has a label that shows a name or a category of the Web site to which the user can make access by depressing the "GO" button.

For example, when the user U1 depresses a fifth "GO" button from the top, the user can make access to a Web site in which the user can look through contents relating to tour (S54).

On the screen D32, there is also laid out a "to My print page" button, in addition to the "GO" button. The function of the "to My print page" button is the same as that of the "GO" button. However, the "to My print page" button is a special button in that the depression of this button makes access to the aggregation server 12.

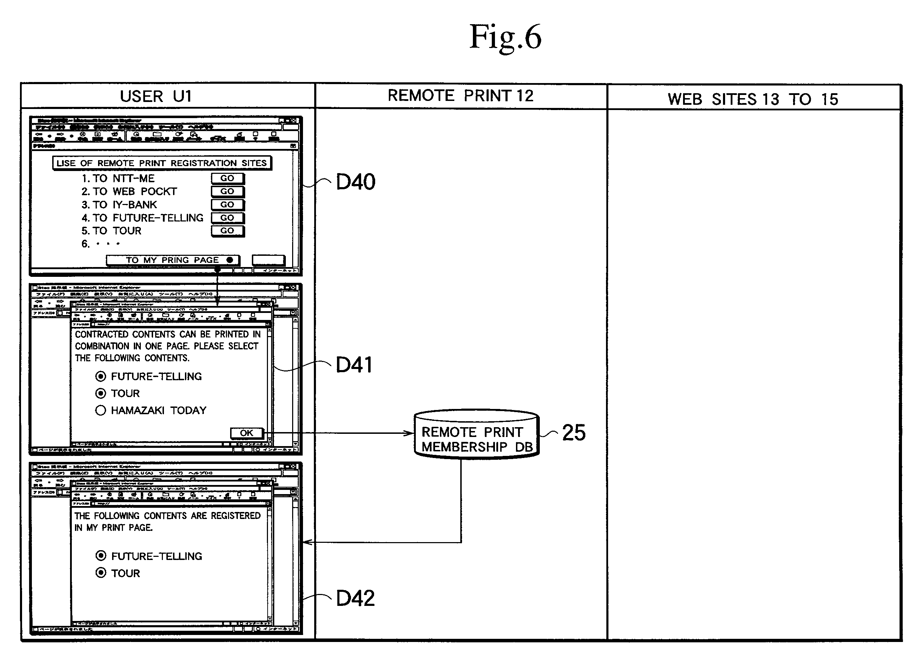

When the "to My print page" button is depressed, the screen shifts to D41 shown in Fig. 6. Fig. 6 shows a detailed operation sequence (screen shift) to specify the contents collection range, and this corresponds to the user U1 operation of making assignment each time when a print out is requested.

### (A-2-4) Contents collection operation

In Fig. 6, when the "to My print page" button is depressed on the screen D40 that corresponds to the screen D32 shown in Fig. 5, the screen shifts to the screen D41. On this screen D41, there are buttons having labels that show names or categories of Web sites that are registered in the URL link table TB2, such as fortune-telling and tour. These buttons are used to select a contents collection range, and it is possible to select a plurality of contents at the same time. In the example shown in Fig. 6, fortune-telling and tour are selected at the same time.

When the user U1 depresses the "OK" button after confirming the selection, the selected contents are transmitted to the aggregation server 12.

The aggregation server 12 receives the selected contents, and gives a flag that shows that the "My print page" has been selected for the contents items selected on the screen D41 among URLs registered in advance in the table TB1 of the membership data base 25. When this processing is completed, the screen D42 shown in Fig. 6 displays a message "The following contents have been registered to the My print page."

The printing of the selected information based on the "My print page" will be explained with reference to Fig. 7.

First, the user U1 inputs a user ID and a password for the aggregation service (S60). The aggregation service supplier collates the member (S61), and displays the "My print page" information registered using the user ID, at the MMK terminal 40 (S62). The user U1 selects a page that the user wants to be printed out (S63). The aggregation server 12 searches for the information of the page that the user U1 wants to be printed out, from among the information registered in advance as the "My print page", based on the information transmitted via the MMK terminal 40 (S64). Based on this, the aggregation server 12 makes access to each Web site (S65). Each Web site transmits the contents based on the access (S66). The aggregation server 12 receives the contents (S67), and prepares print data (S68).

The prepared print data is stored into the folder of the user U1 within the membership folder 30, and is then transmitted to the MMK terminal 40 (S69).

When necessary, a print preview may be displayed on the screen before or after the screen D50 (S70). At the point time when the print data has been stored into the folder, a print ready notice may be transmitted to the user U1 in a similar manner to that shown in Fig. 3. The print ready notice is transmitted to the portable telephone 11 by e-mail, not to the personal computer 10 of the user U1.

When the print data has been stored into the folder, the user U1 operates the MMK terminal 40 located at a near position (S71). As a result, the user U1 can obtain a screen display output or a print output of the print data from the MMK terminal 40 (S72).

Many MMK terminals 40 are connected to the aggregation server 12. Therefore, at the time of inputting a password, it is necessary that a MMK terminal 40 transmits its own ID (MMK-ID) thereby to inform the aggregation server 12 of a print data transmission destination.

Depending on the frequency that the Web sites 13 to 15 transmit attribute information and alteration contents, the aggregation server 12 and the mail server of a portable telephone network that accommodates the portable telephone 11 become in a state of receiving an attack of mail bombs. Therefore, to securely prevent the occurrence of such a situation, it is preferable to provide a changeable upper limit to the frequency of transmitting the attribute information and alteration contents.

It is preferable that the user U1 can set details of conditions that prescribe when the Web sites 13 to 15 can transmit attribute information and alteration contents (that is, a standard of deciding an alteration of contents). However, the conditions set by the user U1 must not be the ones that can be easily changed by a third party. Regardless of a setting by the user U1 or a setting by a third party, the transmission frequency is limited to not higher than the upper limit.

Last, the distribution operation of alteration contents will be explained with reference to Fig. 8. This operation is executed basically when the Web sites 13 to 15 detected an alteration of contents. Fig. 8 assumes a state that the user U1 is not at the installation position of the personal computer 10 at home or at an office, and is out.

### (A-2-5) Distribution operation of alteration contents

In Fig. 8, at step S80, when a certain Web site has detected an alteration of contents, the Web site transmits the contents after the alteration (alteration contents) and the attribute information of the alteration contents to the aggregation server 12.

According to an access using a normal HTTP protocol, what is called pull-type communications are carried out. That is, when an HTTP client (the aggregation server 12, in this example) transmits a request, an HTTP server (the Web sites 13 to 15, in this example) responds to the request. However, according to the communications at step S80, what is called push-type communications are carried out. That is, the Web sites 13 to 15 autonomously transmit contents and attribute information, without receiving a request.

For closed contents and their attribute information, it is possible to utilize an e-mail that is encoded with S/MIME, for example.

The attribute information is information that gives a prior notice to the user U1 about the contents distribution, by providing the user with outline information such as a number of cases and item names regarding the corresponding contents. It is efficient to carry out the communications in the order of first a transmission of attribute information, and then a transmission of alteration contents. This order also has an advantage in that it is possible to shorten the time of accumulating the print data (that can be edited from a plurality of alteration contents) into the membership folder 30 of the aggregation server 12. The attribute information includes at least a URL of the Web site that transmits this attribute information.

Upon receiving the attribute information, the aggregation server 12 searches the table TB1 relating to the users (U1 is one of them), using the URL included in the attribute information as a searching key, and specifies a user to whom the attribute information needs to be transmitted (S81).

Each user registers an e-mail address of the own portable telephone 11 in the aggregation server 12 in advance. Then, the aggregation server 12 automatically generates an e-mail that describes information on a number of cases (number of cases of alteration contents) of the attribute information for each name of a Web site and for each category, and transmits this information to the e-mail address (S82).

According to main portable telephone networks in Japan, all of these networks employ such a structure that when an e-mail arrives at a portable telephone accommodated in the network, a call-arrival notice or the e-mail itself is immediately sent to this portable telephone 11. Therefore, a user U1 who has the portable telephone 11 can read the contents of the e-mail, and can quickly confirm the information on a number of print pages and a number of cases, for each name of a Web site that has transmitted alteration contents and for each category (S83).

When the user U1 has admitted the necessity of confirming detailed alteration contents, the user U1 can make access to the aggregation server 12 (S84) by utilizing the bookmark function of the browser of the portable telephone 11, and can look through the screen like the screen D50, for example.

### (A-3) Effects of the embodiment

As explained above, according to the present embodiment, when the user depresses the "print" button during a looking-through of other Web sites (13 to 15), it is possible to carry out membership registration to the aggregation server (12) and print output. Therefore, the user (U1) does not concentrate on only the aggregation server but is led to maintain a contact with other Web sites. This is desirable for both the aggregation server and the Web sites. The Web sites can maintain the efficiency of promotion, and can manage user's utilization state.

The user can always confirm the latest contents, and can receive the aggregation service and the remote print service. Therefore, a system structure of high reliability is provided.

Further, in the liaison registration operation from the membership Web site in the present embodiment, the user does not need to sequentially input a user ID and a password in the membership Web site. As a result, the user's operation load is reduced, and the user can easily utilize the service.

### (B) Other embodiments

An aggregation server may be included in the Web sites 13 to 15. It is possible to execute aggregation at stages, based on this aggregation server and the aggregation server 12 in the above embodiment.

A structure of the aggregation server included in the Web sites 13 to 15 may be the one as shown in Fig. 2A, for example. When a multi-stage aggregation is carried out, it is possible to output a screen that has an aggregation screen (for example, a window having a structure similar to the screen SE3) laid out in the window of the Web: C data in the screen SE3. In this case, the contents displayed in the window of the Web: C data show a result of the aggregation by the aggregation server shown in Fig. 2A.

However, the aggregation server shown in Fig. 2A does not have a structure that enables the liaison mechanism to be built up with the aggregation server 12. In other words, this aggregation server does not have a function of automatically transmitting a user ID and a password to the aggregation server 12 according to the depression of the "print" button.

Therefore, when an aggregation site as shown in Fig. 2A is included as one of the Web sites 13 to 15, in order for the user U1 to carry out a membership registration to the aggregation server 12, the user U1 needs to input a user ID and a password as a member of the aggregation server shown in Fig. 2A, on a registration screen corresponding to the screen D10. When the aggregation server shown in Fig. 2A is included in the contents collection range, the aggregation server 12 makes a log-in to the aggregation server shown in Fig. 2A, by utilizing the user ID and the password that have been input. As a result, the multi-stage aggregation can be realized.

The above point also applies to a case where the aggregation server shown in Fig. 2A is replaced with a conventional Web site that does not have a liaison mechanism of the Web sites 13 to 15.

The liaison mechanism of the present embodiment takes a structure that the membership Web site (for example, 13) automatically transmits a user ID and a password to the aggregation server 12. However, depending on the operation policy of the membership Web site, the processing of transmitting a user ID and a password to the outside is not carried out. For example, a Web site that is operated by a financial organization has a high possibility of adopting this operation policy, in order to maintain high security and reliability.

Of course, there is no difficulty when the Web site that adopts this operation policy employs a structure of the aggregation server 12. However, when there exists a Web site that adopts this operation policy at the outside of the aggregation server 12, it is necessary to carry out a processing similar to the processing carried out when the aggregation server shown in Fig. 2A is included in the Web sites 13 to 15.

While the aggregation server 12 has a function of a remote print server in the above embodiment, a remote print server function may be provided in the Web sites 13 to 15 (including the aggregation server shown in Fig. 2A). In this instance, the remote print server provides contents that have the "print" button at a part or at the periphery thereof.

While the number of Web sites that are connected to the aggregation server 12 is three in the above embodiment, the number of the Web sites is not limited to three.

The portable telephone that is used in the above embodiment may be replaced with other portable information terminal such as a PHS terminal and a PDA.

Further, while the aggregation server 12 and the Web sites 13 to 15 are provided separately (separate sites) in the above embodiment, these may be provided in the same site, when the service supplier is the same.

As explained above, according to the present invention, it is possible to provide a membership information integrated management system and a membership information integrated management service that can be used easily, with high reliability, and enable the server to manage the user's utilization state .

## Claims

1. A membership information integrated management system comprising a target server, and a membership server that is connected to the target server and that requires a membership registration, wherein
the target server adopts a membership system that identifies a user based on predetermined target user identification information, and
comprises a first liaison starting section that starts a predetermined first liaison processing according to a user operation, and
the membership server comprises:
a first liaison executing section that receives a start of the first liaison processing, and executes the first liaison processing; and
a first user identification information storing section that stores membership user identification information to identify the user in the membership server by relating this information to the target user identification information, and
when a first starting operation to start the first liaison processing is carried out while the user is making access to the objet server thereby to start the first liaison processing, the first liaison starting section transmits the target user identification information of the user to the first liaison executing section, and the first liaison executing section receives the target user identification information and checks whether the user is registered as a member in the membership server, and when it has become clear that the user is not registered as a member, the first liaison executing section urges the user to input membership user identification information and register membership.

2. A membership information integrated management system comprising a target server, and a membership server that is connected to the target server and that requires a membership registration, wherein
the target server adopts a non-membership system that does not clearly identify a user based on the user' s intention, and
comprises a second liaison starting section that starts a predetermined second liaison processing according to a user operation or generates a program code for starting the second liaison processing, and
the membership server comprises:
a second liaison executing section that receives a start of the second liaison processing, and executes the second liaison processing; and
a second user identification information storing section that stores membership user identification information to identify the user in the membership server, and
when a second starting operation to start the second liaison processing is carried out to the program or the second liaison starting section while the user is making access to the objet server thereby to start the second liaison processing, the second liaison executing section checks whether the user is registered as a member in the membership server, and when it has become clear that the user is not registered as a member, the second liaison executing section urges the user to input membership user identification information and register membership.

3. The membership information integrated management system according to claim 1 or 2, wherein
the first starting operation or the second starting operation
is a non-goal operation to be carried out by the user for an external processing other than the membership registration, and
when it has become clear that membership registration has been carried out as a result of the checking, the membership server executes straight the external processing as a part of the first liaison processing or as a part of the second liaison processing.

4. A membership information integrated management system comprising a target server, and a membership server that is connected to the target server and that requires a membership registration, wherein
the membership server comprises:
a target server access information storing section that stores target server access information to be used to specify a target server at the time of making access to the target server, for each one or a plurality of target servers selected by the user; and
a contents obtaining section that presents screen information showing the target server to the user, makes access to the target server by using corresponding target server access information according to a user's selection operation based on the screen information, and obtains contents from the target server.

5. A membership information integrated management system comprising a target server, and a membership server that is connected to the target server and that requires a membership registration, wherein
the target server comprises:
an automatic transmitter that automatically transmits corrected contents to the membership server when there has been a change in specified contents according to a condition specified in advance, and
the membership server comprises:
an external shape attribute transmitter that obtains external shape attribute information showing predetermined external shape attribute relating to contents received from the automatic transmitter, and transmits the external shape attribute information to a user terminal specified in advance by the user; and
an edit provider that carries out a predetermined edit processing to contents received from the automatic transmitter, and provides an edit result to the user.

6. A membership information integrated management service that uses a target server, and a membership server that is connected to the target server and that requires a membership registration, wherein
in the target server, a membership system that identifies a user based on predetermined target user identification information is adopted, and
a first liaison starting section starts a predetermined first liaison processing according to a user operation, and
in the membership server,
a first liaison executing section receives a start of the first liaison processing, and executes the first liaison processing, and
as a part of the first liaison processing, a first user identification information storing section stores membership user identification information to identify the user in the membership server by relating this information to the target user identification information, and
when a first starting operation to start the first liaison processing is carried out while the user is making access to the objet server thereby to start the first liaison processing, the first liaison starting section transmits the target user identification information of the user to the first liaison executing section, and the first liaison executing section receives the target user identification information and checks whether the user is registered as a member in the membership server, and when it has become clear that the user is not registered as a member, the first liaison executing section urges the user to input membership user identification information and register membership.

7. A membership information integrated management service that uses a target server, and a membership server that is connected to the target server and that requires a membership registration, wherein
in the target server, a non-membership that does not clearly identify a user based on the user' s intention is adopted, and
a second liaison starting section starts a predetermined second liaison processing according to a user operation or generates a program code for starting the second liaison processing, and
in the membership server,
a second liaison executing section receives a start of the second liaison processing, and executes the second liaison processing, and
a second user identification information storing section stores membership user identification information to identify the user in the membership server, and
when a second starting operation to start the second liaison processing is carried out to the program or the second liaison starting section while the user is making access to the objet server thereby to start the second liaison processing, the second liaison executing section checks whether the user is registered as a member in the membership server, and when it has become clear that the user is not registered as a member, the second liaison executing section urges the user to input membership user identification information and register membership.

8. The membership information integrated management service according to claim 6 or 7, wherein
the first starting operation or the second starting operation
is a non-goal operation to be carried out by the user for an external processing other than the membership registration, and
when it has become clear that membership registration has been carried out as a result of the checking, the membership server executes straight the external processing as a part of the first liaison processing or as a part of the second liaison processing.

9. A membership information integrated management service that uses a target server, and a membership server that is connected to the target server and that requires a membership registration, wherein
the membership server
stores target server access information to be used to specify a target server at the time of making access to the target server, for each one or a plurality of target servers selected by the user, and
presents screen information showing the target server to the user, makes access to the target server by using corresponding target server access information according to a user's selection operation based on the screen information, and obtains contents from the target server.

10. A membership information integrated management service that uses a target server, and a membership server that is connected to the target server and that requires a membership registration, wherein
in the target server,
an automatic transmitter automatically transmits corrected contents to the membership server when there has been a change in specified contents according to a condition specified in advance, and
the membership server
obtains external shape attribute information showing predetermined external shape attribute relating to contents received from the automatic transmitter, transmits the external shape attribute information to a user terminal specified in advance by the user, and
carries out a predetermined edit processing to contents received from the automatic transmitter, and provides an edit result to the user.
